# EUROPEAN PATENT SPECIFICATION

(11) **EP 1 442 351 B1**
(45) Date of publication and mention of the grant of the patent: **02.07.2008**
(21) Application number: 02765236.1
(22) Date of filing: 12.09.2002
(51) Int. Cl.: G06F 21/00

(54) **SECURE CONTENT DISTRIBUTION METHOD AND SYSTEM**
VERFAHREN UND SYSTEM ZUR SICHEREN INHALTSVERTEILUNG
PROCEDE ET SYSTEME DE DISTRIBUTION SURE D'UN CONTENU

(30) Priority: 12.10.2001 EP 01203911
(43) Date of publication of application: 04.08.2004
(73) Proprietor: Koninklijke Philips Electronics N.V., 5621 BA Eindhoven (NL)
(72) Inventor: KELLY, Declan, P., NL-5656 AA Eindhoven (NL); VAN GESTEL, Wilhelmus, J., NL-5656 AA Eindhoven (NL)
(74) Representative: Groenendaal, Antonius W. M.
(86) International application number: PCT/IB2002/003751
(87) International publication number: WO 2003/034190

(56) References cited:
- EP-A- 1 267 244
- WO-A-98/42098
- US-A- 5 987 525
- US-A- 6 055 314
- US-A1- 2001 025 340
- GREGORY KESDEN: "Content Scrambling System (CSS)" LECTURE 33 , [Online] 6 December 2000 (2000-12-06), XP002258975 Carnegie Mellon University Retrieved from the Internet: <URL:http://www-2.cs.cmu.edu/~dst/DeCSS/Ke sden/> [retrieved on 2003-10-22] cited in the application

## Description

The invention relates to a secure content distribution system.

DVD technology allows content producers to offer much more than a simple movie on a disc. Because of the large storage capacity available, all kinds of additional content can be provided on the disc. For example, behind the scenes footage, outtakes, interviews with directors and/or actors, subtitles in different languages, and the soundtrack with video clip can be included.

Now that more and more home entertainment systems have access to the Internet in some way, it becomes possible to provide additional content not only on the DVD disc, but also on a website. This is known as Web-connected DVD. In its most basic form, a user watching a movie and connected website for the movie and see additional information, watch new interviews or reports on the movie and so on. He could also participate in an online game related to the movie.

It is desirable to protect this additional content against unauthorized access and/or copying. In particular, access to the additional content should be restricted to only people who own a legitimate specimen of the disc.

A simple solution would be to first verify in some way that the user owns a specimen of the DVD disc, and then distributing the additional content from the server. This could be realized for instance by supplying an identifier stored on the disc to the website, where it can be compared against a list of correct identifiers. However, the solution is very insecure, since the identifier could simply be copied from an original specimen and used by unauthorized devices to illegitimately access the additional content.

WO98/42098 discloses a rights management technique for digital content. The content is distributed on a record carrier in encrypted form. Certain fragments are withheld and provided only upon communication with a license server. The fragments are encrypted with the same keys as the content on the carrier.

EP-A-1 267 244, which is comprised in the state of the art under Article 54(3) EPC only, describes a method of transferring information on an optical disc in encrypted form. Additional content is downloaded from a remote location. The additional content is encrypted using a user personalized secure signature formed from data that is unique for each optical disc.

The invention is defined by the appended claims.

By sharing security mechanism and secret, there is less sensitive information that needs to be protected. In DVD, the title key and disc key can only be obtained by a client (typically a rendering device that is connected to a DVD drive) from the DVD disc, so this also ensures that only clients having access to the record carrier can decrypt the additional content. The security mechanisms used to protect DVD content were designed to be resistant to active attacks by malicious third parties, and they can also be used to protect the additional content, which is equally attractive to those third parties.

Additionally, by involving a secret that can only be known if the recipient of the additional content has access to the record carrier, the distributing entity can be sure that only recipients who in fact have access to that record carrier can decrypt the additional content.

In an embodiment the device further comprises synchronization means for synchronizing the obtaining of the basic content with the obtaining of the additional content. In DVD, in particular the title key can be varied on a sector basis. By choosing the secret to protect the additional content to be the same as the title key, this secret can be varied at the same time as the title key. It is then necessary to synchronize the obtaining of basic content and additional content, so that the correct secret is available for decrypting the additional content.

In a further embodiment the conditional access means are arranged for performing an authentication protocol with the server using a secret authentication control code (ACC) present on the record carrier to establish a session key, and using the session key to encrypt the additional content. The device can only successfully complete the authentication when it knows the ACC, or at least it can only derive the correct session key if it knows the ACC. This ensures that the device can only decrypt the additional content if it has access to the record carrier.

In an embodiment the conditional access means are further arranged for decrypting the additional content using a decryption key that was also used to decrypt at least one portion of the basic content.

These and other aspects of the invention will be apparent from and elucidated with reference to the embodiments shown in the drawings, in which:
Fig. 1 schematically shows the major components of a system for making available additional content related to basic content, comprising a DVD drive and a rendering device;
Fig. 2 illustrates the DVD Content Scrambling System for the case that the DVD-drive and the rendering device are installed in one playback device.
Fig. 3 illustrates the Content Scrambling System for the case that the DVD drive is connected using a digital interface or bus to an external rendering device; and
Fig. 4 schematically shows the rendering device in more detail.

Throughout the Figures, same reference numerals indicate similar or corresponding features. Some of the features indicated in the drawings are typically implemented in software, and as such represent software entities, such as software modules or objects.

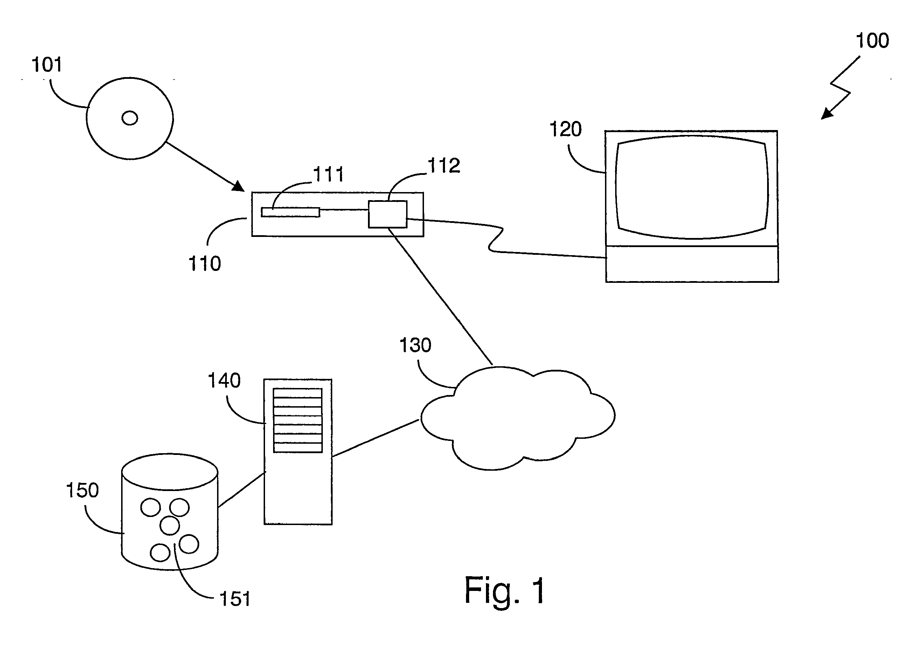

Fig. 1 schematically shows the major components of a system 100 according to the invention. The system 100 comprises a playback device 110 and a display device 120. In a preferred embodiment the playback device 110 is a DVD player comprising a DVD drive 111 and a rendering device 112, which can be embodied as a decoder card. The DVD drive 111 and rendering device 112 could also be provided as physically separate devices. The DVD drive 111 could for instance be installed in a computer, whereby the rendering device 112 is provided as a software application running on the computer. The rendering device 112 could also be installed in the display device 120, as could the DVD drive 111.

A user can place a record carrier 101, such as a DVD disc, in the DVD drive 111. The content stored on the record carrier 101 is then read out and supplied to the rendering device 112, where it is decoded and processed to generate an audio/video signal. This audio/video signal is then fed to the display device 120 for presentation to the user. This way, the user could for example view a movie stored on a DVD disc on his television.

The playback device 110 is further connected to an external network 130, which is preferably the Internet. The connection to the external network 130 can be realized with a cable modem, an ADSL line, or an ordinary modem installed in the playback device 110 and connected to a telephone line. The connection could also be realized by linking the rendering device112 to an Ethernet or other local network which provides access to the external network 130. The connection to the external network 130 will be used to download content such as movies or music, and so preferably is a high-bandwidth connection.

Also connected to the external network 130 is a server 140. The server 140 offers additional content items 151 for download e.g. from storage 150. The content items 151 relate to and extend the content on the record carrier 101. For example, the content items 151 could comprise different versions of the soundtrack of a movie, audio dubbings or textual subtitles for the movie in different languages, behind the scenes footage, additional scenes, different endings, games based on the movie, interviews with actors and other participants, live events related to the content stored on the record carrier 101, and so on.

The record carrier 101 will typically have an indication of some kind that these additional content items 151 are available. This could be an informational message printed on the protective cover of the record carrier 101, but might also be a computer-readable indicator present on the record carrier 101 itself. In that case, the DVD drive 111 could automatically detect the indicator. The playback device 110 could then offer to the user the option to access the additional content items 151. If the user approves, the playback device 110 uses its connection to the external network 130 to contact the server 140. It can then obtain a list of available additional content items 151 from which the user can select one or more to access. Many other ways to access, present and manage the additional content items 151 can easily be conceived.

The content on the record carrier 101 comprises a plurality of so-called titles. A title can be for instance a video stream, an audio stream and so on. To guard against unauthorized copying, the titles on the record carrier 101 can be protected in a variety of ways.

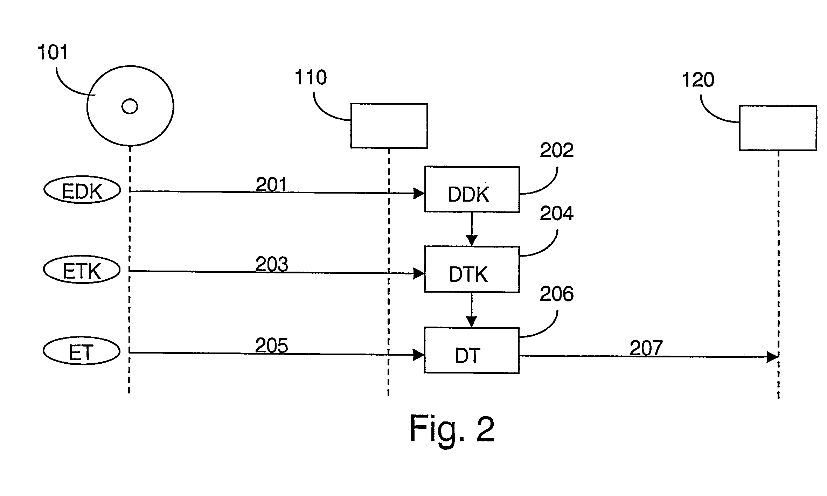

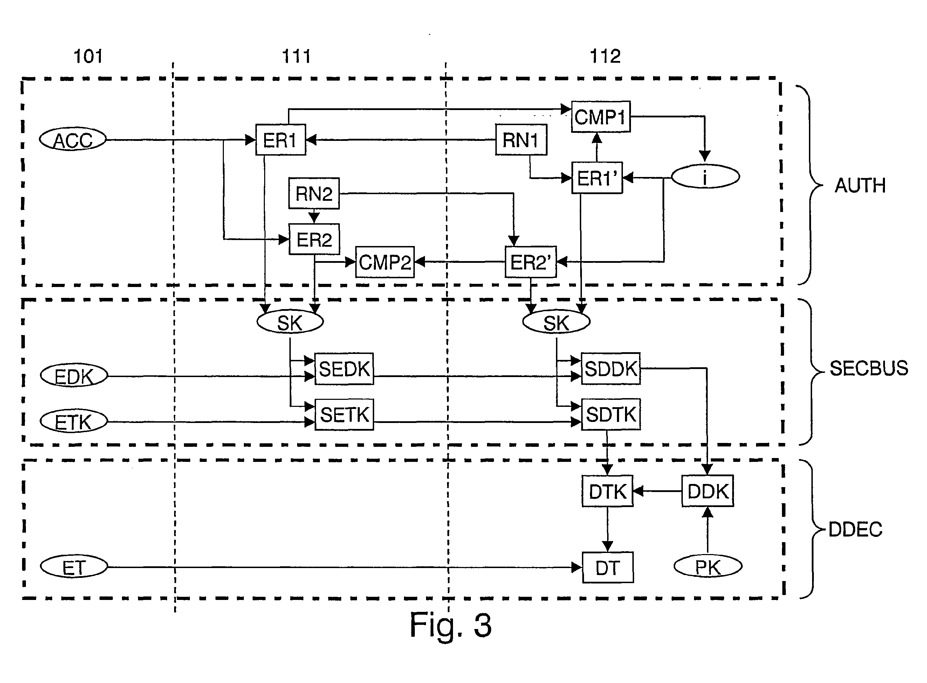

In case the record carrier 101 is a DVD disc, the Content Scrambling System (CSS) is used. In Fig. 2 a summary is given of how the CSS is used in case the DVD-drive 111 and the rendering device 112 are installed in one playback device 110. This summary, as well as the summary of Fig. 3, is based on information publicly available on the Internet and from other sources such as a public lecture on CSS by Gregory Kesden at Carnegie Mellon University on December 6, 2000. A transcript of this lecture is available on the Internet at http://www-2.cs.cmu.edu/∼dst/DeCSS/Kesden/

The record carrier 101 contains Encrypted Disc Keys EDK which are stored in the so-called Lead-in area. The Lead-in area can be read by compliant DVD drives. The Disc Key is the same for all content on the disc. The data is encrypted in units of one sector. Every sector has an Encrypted Title Key ETK in the sector header. The Title key might be changed on a sector basis.

The playback device 110 comprises one or more player keys, which can be used to decrypt the encrypted disc key EDK on the record carrier 101, assuming of course the playback device 110 holds a correct player key. In step 201 the encrypted Disc Key EDK is obtained from the record carrier 101, and decrypted in step 202. Having decrypted the disc key, the playback device 110 receives an encrypted title key ETK in step 203 and uses the decrypted disk key to decrypt the Title Key in step 204.

Next, encrypted titles are received in step 205. The decrypted Title Key is used to decrypt the data in step 206. The playback device 110 can then decrypt the title keys for the desired titles and thereby access the titles themselves. The decrypted data can be decoded to obtain an audio/video signal that is supplied in step 207 to the display device 120 for presenting it to the user.

In Fig. 3 the CSS is illustrated for the case that the DVD drive 111 is connected using a digital interface or bus to an external rendering device 112. There are three main steps that need to be taken: Authentication, Secure bus encryption/decryption and Data Decryption, indicated in Fig. 3 as AUTH, SECBUS and DDEC, respectively.

In the Authentication process AUTH it is checked if the rendering device 112 is a DVD compliant device. Authentication is carried in the following way. The Authentication Control Code ACC is read from the record carrier 101 by the DVD drive 111. A random number RN1 is generated in the rendering device 112. This number RN1 is transmitted to the DVD drive 111. In the DVD drive 111 the number RN1 together with the ACC is encrypted with a secret algorithm in step ER1 and the result of step ER1 is transmitted to the rendering device 112.

In the rendering device 112 the number RN1 is encrypted multiple times in step ERl', each time with a different number i. The result is compared in step CMP1 for each number i with the result of EA received from the DVD drive 111. If the results of ER1 and ER1' match for a certain value of i, then the rendering device 112 knows that that value for the number i is the same as the value of the ACC as read from the record carrier 101.

A random number RN2 is generated in the DVD drive 111 and transmitted to the rendering device 112. The number is encrypted in step ER2 together with the ACC number in the DVD drive 111. In the rendering device 112, the random number RN2 is encrypted in step ER2' together with the value of i that was found to be the same as the ACC in step CMP1 above. In the DVD drive 111 the results of steps ER2 and ER2' are compared in step CMP2 and if these are the same, the DVD drive 111 concludes that the rendering device 112 is a compliant device.

In the Secure Bus function SECBUS the encrypted random numbers RN1 and RN2 (i.e. the output of ER1, ER2 in the DVD drive 111, and the output of ER1' and ER2' in the rendering device 112) are used to derive a Secure Bus Key or session key SK in both the DVD drive 111 and the rendering device 112. It is observed that, if the Authentication procedure AUTH was carried out successfully, the session keys SK established in the respective devices are the same, and so can be used for a secure exchange of data.

In the DVD drive 111 the encrypted Disc Key EDK and the encrypted Title Key ETK are read from the record carrier 101 and encrypted (again) with this Secure Bus Key SK in steps SEDK and SETK respectively. The doubly encrypted Disc Key and Title Key are then transmitted to the rendering device 112.

In the rendering device 112 the Secure Bus Key SK is used to decrypt the doubly encrypted Disc Key and Title Key in steps SDDK and SDTK respectively. The rendering device 112 now has access to the encrypted Disc Key EDK and Title Key ETK. The reason for this double encryption step is to ensure that it is impossible to obtain the encrypted Disc Key EDK and Title Key ETK by tapping the interface between the DVD drive 111 and the rendering device 112.

In the Data Decryption function DDEC the decryption of the sectors takes place in the same way as described in Fig. 2. Summarizing briefly, the rendering device 112 decrypts the Disc Key in step DDK using its player key PK, and then the Title Key in step DTK using the Disc Key. Using the thusly obtained Disc Key and Title Key, the rendering device 112 is now able to decrypt individual titles stored on the record carrier 101.

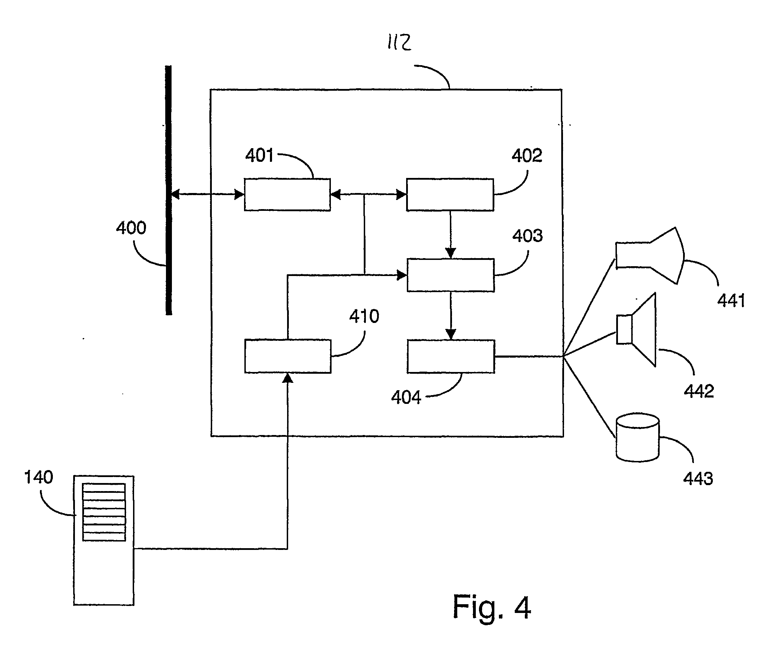

Fig. 4 schematically shows the rendering device 112 in more detail. The rendering device 112 here comprises an IEEE 1394 networking interface module 401, which is connected to an IEEE 1394 local bus 400. In this embodiment, communications with the DVD drive 111 travel over the local bus 400. Other devices may also be connected to the local bus 400.

In the rendering device 112 there is an authentication module 402 which performs the authentication functions AUTH as described above with reference to Fig. 3. There is also a cryptographic module 403 which performs the secure bus encryption/decryption function SECBUS and the data decryption function DDEC as described above with reference to Fig. 3.

The decrypted content is fed from the cryptographic module 403 to output module 404. The output module 404 decodes and processes the content to generate audio and/or video signals for output on display 441 and loudspeaker 442 respectively. The display 441 and loudspeaker 442 together can be regarded as the display device 120. Generating such output is well known in the art. It will be clear that many different audiovisual means 441, 442 are available for rendering the output.

The output module 404 may also store the content on storage medium 443. Of course this is only allowed when the rights associated with the received content permit this. The storage medium 443 can be, for example, a hard disk, a videotape, or a rewritable DVD disc.

The rendering device 120 also comprises a networking module 410. This networking module 410 provides access to the above-mentioned external network 130, which preferably is the Internet. The networking module 410 can for instance be realized as a networking card coupled to a cable modem together with the appropriate software. A modem connected to an ADSL line, or a networking card coupled to e.g. an Ethernet-based LAN could also be used.

As explained above with reference to Fig. 1, the networking module 410 at some point downloads additional content items 151 from the server 140. It is desirable to protect the additional content items 151 against unauthorized access and/or copying. In particular, access to the additional content items 151 should be restricted to only people who own a legitimate specimen of the record carrier 101.

In accordance with the invention, the additional content items 151 are protected by at least one of the security mechanisms that is also used to protect the content on the record carrier 101. The security mechanism employs one or more secrets, such as the ACC, the disc key or the title keys. One or more of these secrets can also be used when applying the same security mechanism to the additional content items 151.

Upon receiving the protected additional content items 151, the networking module 410 feeds them to the cryptographic module 403 so that they can be decrypted and be rendered by the output module 404 just like the basic content on the record carrier 101. This feeding can be done in a streaming fashion, e.g. feeding individual blocks of the additional content items 151 to the cryptographic module 403 as they arrive, preferably employing some kind of buffering mechanism e.g. to facilitate streaming.

In a first embodiment the authentication protocol described with reference to Fig. 3 is also used between the rendering device 112 and the server 140. The rendering device 112 now engages in the Authentication process AUTH with the server 140 just like it did before with the DVD drive 111. That is, the server 140 now takes the place of the DVD drive 111. The network 130 now takes the place of the secure bus between DVD drive 111 and rendering device 112.

In the authentication process AUTH of Fig. 3 the rendering device 112 determined a value i that is the same as the ACC number from the record carrier 101 after a successful authentication with the DVD-drive 111. The rendering device 112 can use this value i to prove to the server 140 that it has access to the record carrier 101. The server 140 can then supply the additional content items 151 to the rendering device 112.

The server 140 reads the ACC number from a record carrier identical to record carrier 101 and uses this ACC as input for the authentication process. In deviation from the AUTH process in Fig. 3, the server 140 now first supplies a randomly chosen number RN2" to the rendering device 112, where it is used as input to ER2' together with said value of i equal to the ACC. The output of ER2' is supplied back to the server 140 and compared in CMP2 with the output of ER2 using RN2" and the ACC.

If CMP2 is successful, the server 140 decides that the rendering device 112 knows the value of the ACC, and therefore must have access to the record carrier 101. By reversing the exchange of random numbers in this fashion, it is not possible for the rendering device 112 to pretend to have access to the ACC, or to learn the ACC from interactions with the server 140.

To complete the authentication process, the rendering device 112 now generates a random number RN1" and sends this to the server 140, where it is used as described above with reference to Fig. 3, except that only one iteration is necessary since the right value of i is already known. This way, the authentication process is completed and both the server 140 and the rendering device 112 have the inputs necessary to generate the session key SK. One or more of the additional content items 151 can then be transmitted to the rendering device 112 over the external network 130 in an encrypted fashion. In this embodiment the Disc Key and the Title Key from the record carrier 101 can be derived in the server 140.

The additional content items 151 delivered by the server 140 use the same Disc key and Title keys for all information which should be presented synchronously with the original content from the record carrier 101. Timing information is used to detect changing Title Keys. These keys do not need to be transmitted over the network 130. Over the network 130 the additional content items 151, packed in sectors and encrypted first with the Title key and afterwards with the session key, are transmitted. It is clear that in this embodiment the record carrier 101 and the record carrier used in the server 140 should be the same, and have the same keys.

In a second embodiment, the Disc Key from the record carrier 101 is applied Authentication takes place as described above. The Disc Key and a fixed Title Key are used to encrypt the sectors. The fixed Title key is e.g. the fixed pattern '00' or a random number. In the last situation it must be transmitted in a secure way to the rendering device 112.

Synchronization between the record carrier 101 and the record carrier used by the server 140 is not needed, as the Disc Key is known on both sides. The correct record carrier 101 is needed because the server has used the ACC number for deriving a Session Key and the Disc Key for encrypting the sectors. These keys however are not transmitted over the external network 130

In another embodiment, no authentication between the server 140 and the rendering device 112 is necessary. This method can be used to distribute additional content to all owners of the record carrier 101, at the same time. The server 140 now supplies the additional content items(s) 151 encrypted with the Disc and Title Keys. If synchronization between basic content and additional content is required then the method described in the first embodiment can be applied.

If synchronization is not needed then encryption of the additional content 151 can be carried out with the Disc key from the record carrier 101 and a Title Key which is chosen by the server. If this Title key is not fixed then it is transmitted encrypted to the rendering device 112. Different title keys can be used to encrypt different parts of a title. The key necessary to decrypt the additional content items 151 can then be varied accordingly

It is also possible to distribute the additional content items 151 without any authentication, using the Disc Key or Title Key from the record carrier 101 as an encryption key to encrypt the additional content items 151 before distributing them.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In the device claim enumerating several means, several of these means can be embodied by one and the same item of hardware. The mere fact that certain measures are recited in mutually different dependent claims does not indicate that a combination of these measures cannot be used to advantage.

## Claims

1. A system (100) comprising:
- a server (140),
- a rendering device (112) arranged for receiving basic content available on a DVD disc (101) from a DVD drive (111) and for rendering said basic content,
at least one portion of the basic content being protected by the Content Scrambling System employing a DVD disk key and one or more DVD title keys,
the rendering device (112) comprising:
- conditional access means (402, 403) for decrypting the basic content using said DVD disk key and said at least one or more DVD title keys,
- receiving means (410) for receiving additional content (151) related to the basic content from the server (140),
the additional content (151) being encrypted employing at least one encryption key from said DVD disk key and said one or more DVD title keys used to protect at least one portion of the basic content,
the conditional access means (402,403) being arranged for decrypting the additional content (151) using said at least one encryption key, and
the server (140) being configured for obtaining said at least one encryption key from a further record carrier that is identical to said DVD disk (101).

2. The system of claim 1, in which the rendering device (112) comprises synchronization means for synchronizing the decrypting of the basic content with the decrypting of the additional content (151) when said at least one encryption key is at least said one or more DVD title keys.

3. The system of claim 1, in which the conditional access means (402,403) are arranged for performing an authentication protocol with the server using a secret authentication control code present on said DVD disk to establish a session key, and using the session key to encrypt the additional content after encrypting the additional content with said at least one encryption key.

4. The system of claim 1, further comprising a playback device (110) coupled to the rendering device (112).

5. The system of claim 4, further comprising a display device (120) coupled to the playback device (110) and/or the rendering device (112).

## Patentansprüche

1. System (100), das Folgendes umfasst:
- einen Server (140),
- eine Renderinganordnung (112) vorgesehen zum Empfangen von Basisinhalt. Verfügbar auf einer DVD Disk (101) von einem DVD Laufwerk (111) und zum Rendern des genannten Basisinhalts,
- wenigstens einen Teil des Basisinhalts, der von dem Inhaltsverschlüsselungssystem geschützt wird, wobei ein DVD Diskschlüssel und ein oder mehrere DVD Titelschlüssel benutzt werden,
wobei die Renderinganordnung (112) Folgendes umfasst:
- Mittel zum bedingten Zugriff (402, 403) zum Verschlüsseln des Basisinhalts unter Anwendung des genannten DVD Diskschlüssels und der genannten wenigstens einen oder mehreren DVD Titelschlüssel,
- Empfangsmittel (410) zum Empfangen zusätzlichen Inhalts (151) in Bezug auf den Basisinhalt von dem Server (140),
wobei der zusätzliche Inhalt (151) verschlüsselt ist, und zwar unter Anwendung wenigstens eines Verschlüsselungsschlüssels von dem genannten DVD Diskschlüssel und des genannten einen oder der genannten mehreren DVD Titelschlüssel, verwendet zum Schützen wenigstens eines Teils des Basisinhalts,
wobei die Mittel zum bedingten Zugriff (402, 403) dazu vorgesehen sind, den zusätzlichen Inhalt (151) zu verschlüsseln, und zwar unter Anwendung des genannten wenigstens einen Verschlüsselungsschlüssels, und
wobei der Server (140) konfiguriert ist zum Erhalten des genannten wenigstens einen Verschlüsselungsschlüssels von einem weiteren Aufzeichnungsträger, der der genannten DVD Disk (101) entspricht.

2. System nach Anspruch 1, wobei die Renderinganordnung (112) Synchronisationsmittel zum Synchronisieren der Verschlüsselung des Basisinhalts mit der Verschlüsselung des zusätzlichen Inhalts (151) aufweist, wenn der genannte wenigstens eine Verschlüsselungsschlüssel wenigstens der genannte eine oder mehrerer DVD Titelschlüssel ist.

3. System nach Anspruch 1, wobei die Mittel zum bedingten Zugriff (402, 403) dazu vorgesehen sind, ein Authentifizierungsprotokoll mit dem Server durchzuführen, und zwar unter Anwendung eines geheimen Authentifizierungscodes, der auf der genannten DVD Disk vorhanden ist, und zwar zum Bilden eines Sessionsschlüssels, und wobei der Sessionsschlüssel zum Verschlüsseln des zusätzlichen Inhalts nach der Verschlüsselung des zusätzlichen Inhalts mit dem genannten wenigstens einen Verschlüsselungsschlüssels verwendet wird.

4. System nach Anspruch 1, das weiterhin eine Wiedergabeanordnung (110) aufweist, die mit der Renderinganordnung (112) gekoppelt ist.

5. System nach Anspruch 4, das weiterhin eine Wiedergabeanordnung (120) aufweist, die mit der Wiedergabeanordnung (110) und/oder der Renderinganordnung (112) gekoppelt ist.

## Revendications

1. Système (100) comprenant :
- un serveur (140),
- un dispositif de restitution (112) conçu pour recevoir un contenu de base disponible sur un disque DVD (101) en provenance d'un lecteur de DVD (111) et pour restituer ledit contenu de base,
au moins une partie du contenu de base étant protégé par le Système d'Embrouillage de Contenu en utilisant une clé de disque DVD et une ou plusieurs clé(s) de titre(s) de DVD, le dispositif de restitution (112) comprenant :
- des moyens d'accès conditionnels (402, 403) pour décrypter le contenu de base en utilisant ladite clé de disque DVD et ladite une ou plusieurs clé(s) de titres DVD,
- des moyens de réception (410) pour recevoir un contenu supplémentaire (151) lié au contenu de base en provenance du serveur (140),
le contenu supplémentaire (151) étant crypté en utilisant au moins une clé de cryptage parmi ladite clé de disque DVD et ladite une ou plusieurs clé(s) de titres de DVD utilisées pour protéger au moins une partie du contenu de base,
les moyens d'accès conditionnels (402, 403) étant conçus pour décrypter le contenu supplémentaire (151) en utilisant ladite au moins une clé de cryptage, et
le serveur (140) étant configuré pour obtenir ladite au moins une clé de cryptage à partir d'un autre support d'enregistrement qui est identique audit disque DVD (101).

2. Système selon la revendication 1, **caractérisé en ce que** le dispositif de restitution (112) comprend des moyens de synchronisation pour synchroniser le décryptage du contenu de base avec le décryptage du contenu supplémentaire (151) lorsque ladite au moins une clé de cryptage est au moins ladite une ou plusieurs clé(s) de titre DVD.

3. Système selon la revendication 1, **caractérisé en ce que** les moyens d'accès conditionnels (402, 403) sont conçus pour effectuer un protocole d'authentification avec le serveur en utilisant un code de contrôle d'authentification secret présent sur ledit disque DVD afin d'établir une clé de session, et pour utiliser la clé de session afin de crypter le contenu supplémentaire après avoir crypté le contenu supplémentaire avec ladite au moins une clé de cryptage.

4. Système selon la revendication 1, comprenant en outre un dispositif de reproduction (110) relié au dispositif de restitution (112).

5. Système selon la revendication 4, comprenant en outre un dispositif d'affichage (120) relié au dispositif de reproduction (110) et/ou au dispositif de restitution (112).
